# EUROPÄISCHE PATENTANMELDUNG

(11) **EP 1 336 465 A1**
(43) Veröffentlichungstag der Anmeldung: **20.08.2003**
(21) Anmeldenummer: 03002447.5
(22) Anmeldetag: 05.02.2003
(51) Int. Cl.: B29C 45/62, B29C 47/08, B22D 19/08

(54) **Verfahren zum Herstellen eines Plastifizierzylinders mit Innenbeschichtung**

(30) Priorität: 14.02.2002 DE 10206169
(71) Anmelder: Krauss-Maffei Kunststofftechnik GmbH, 80997 München (DE)
(72) Erfinder: Zelleröhr, Michael, 47533 Kleve (DE); Würtele, Martin, 86316 Friedberg (DE)
(74) Vertreter: Zollner, Richard

(57) **Zusammenfassung**

Die Erfindung bezieht sich auf einen Plastifizierzylinder für eine kunststoffverarbeitende Maschine, beispielsweise eine Spritzgießeinheit oder einen Extruder. Um den Plastifizierzylinder innen sowohl mit einer Verschleißschutzschicht (12) als auch mit Nuten (14) zu versehen, wird vorgeschlagen, die Nuten (14) vollständig in der Verschleißschutzschicht (12) auszubilden.

Die Verschleißschutzschicht (12) wird vorzugsweise in einem Zentrifugalgießverfahren hergestellt, wobei über Vorsprünge einer im Inneren eines Hohlzylinderkörpers angeordneten Negativform die Nuten (14) gebildet werden.

## Beschreibung

Plastifizierzylinder dienen dem Plastifizieren von Kunststoffgranulat in einem Einspritzaggregat oder einem Extruder mittels einer Schnecke für einen anschließenden Einspritzvorgang. Da beim Plastifizieren die Innenwandung eines Plastifizierzylinders hohen Beanspruchungen ausgesetzt ist, ist es gebräuchlich, sie mit einer Verschleißschutzschicht zu versehen. Dies kann beispielsweise durch das sogenannte Zentrifugalgießen erfolgen, bei dem in einen heißen, rotierenden Hohlzylinderkörper Metallpulver eingebracht wird, das wegen der Zentrifugalkräfte gegen die Zylinderinnenwand gepreßt wird und dort aufgeschmolzen wird. Nach dem Erkalten hat die so aufgebrachte Innenbeschichtung eine relative gute Oberflächenqualität, so daß nur noch geringe Nacharbeiten erforderlich sind.

Für leistungsstärkere Plastifiziereinheiten werden Zylinder mit Nuten benötigt, die sich über nahezu die gesamte Länge des Plastifizierzylinders erstrecken. Die hierfür verwendeten Zylinder sind nicht mit einer Verschleißschutzschicht ausgestattet, sondern die Zylinderrohlinge werden in "weichem Zustand" mit Nuten versehen, wobei anschließend die Zylinderinnenwand durch ein Nitrierverfahren gehärtet wird.

Weiterhin ist es bekannt, sogenannte Nutbuchsen in der Einzugszone von Plastifiziereinheiten vorzusehen, die die Förderung des zugeführten Kunststoffrohstoffes verbessern. Diese Nutbuchsen sind in der Regel aus Gründen des Verschleißschutzes ebenfalls beschichtet, beispielsweise durch heißisostatisches Pressen. Dadurch kann die Verschleißschutzschicht der Nutbuchse entweder direkt in den Plastifizierzylinder eingebracht werden, oder die Nutbuchse wird separat hergestellt und anschließend in dem Plastifizierzylinder eingebracht. Dieses Verfahren eignet sich jedoch nur für relativ kurze Nuten.

Demgegenüber liegt der Erfindung die Aufgabe zugrunde, einen Plastifizierzylinder für eine kunststoffverarbeitende Maschine anzugeben, der eine Innenbeschichtung trägt und an seiner Innenseite eine Nut oder Nuten aufweist, sowie ein Verfahren zu dessen Herstellung anzugeben.

Die Lösung dieser Aufgabe erfolgt durch einen Plastifizierzylinder mit den Merkmalen des Patentanspruchs 1 bzw. durch ein Verfahren gemäß Anspruch 3; die übrigen Patentansprüche betreffen vorteilhafte Weiterentwicklungen der Erfindung sowie eine Vorrichtung zur Durchführung des Verfahrens.

Erfindungsgemäß wird vorgeschlagen, die Nut oder Nuten nicht im Hohlzylinderkörper selbst vorzusehen, sondern die Innenbeschichtung mit einer oder mehreren Nuten auszubilden.

Dies kann vorteilhafterweise in einem Zentrifugalgießverfahren erfolgen, wobei man vor dem Zentrifugalgießen eine sich axial erstreckende, mit axial verlaufenden Vorsprüngen versehenen Negativform in den Hohlzylinderkörper einbringt und nach dem Zentrifugalgießen entfernt.

Dieser Vorgang kann auch zweistufig erfolgen, indem zunächst eine erste glatte Beschichtung auf die Innenwand des Hohlzylinderkörpers durch Zentrifugalgießen ohne Negativform aufgebracht wird und anschließend das Zentrifugalgießen mit der Negativform durchgeführt wird.

Vorteilhafter Weise wird die Negativform im Hohlzylinderkörper zentriert, wobei, bei sehr genauer Maßhaltigkeit der ersten Innenbeschichtung in dem oben genannten zweistufigen Prozeß, gegebenenfalls auf die Zentrierung verzichtet werden kann.

Um eine möglichst glatte Oberfläche der Bereiche zwischen den Nuten zu erzielen, trägt man eine Schichtdicke auf, die kleiner ist als die Höhe der Vorsprünge in Radialrichtung. In dem oben beschriebenen zweistufigen Verfahren kann die erste Innenbeschichtung in den Bereichen, in denen die Vorsprünge angeordnet werden, gehont werden, so daß in einfacher Weise glatte Nutengründe erzielt werden. Desweiteren kann die gesamte Innenbeschichtung gehont werden.

Die Negativform kann beispielsweise einen vorzugsweise zylindrischen Grundkörper aufweisen, der axialverlaufende Vorsprünge trägt, wobei der Durchmesser des Grundkörpers kleiner ist als der End-Innendurchmesser des beschichteten Plastifierzylinders; die Vorsprünge können auch Teil eines Käfigs sein.

Um das Entfernen der Negativform zu erleichtern, können die Vorsprünge eine haftungsund/oder reibungsmindernde Schicht aufweisen.

Dem gleichen Zweck dient es, die Vorsprünge in der Richtung, in der die'Negativform aus dem beschichteten Hohlzylinderkörper entfernt wird, so auszubilden, daß sie eine zunehmende Breite in Umfangsrichtung und/oder eine zunehmende Höhe in Radialrichtung aufweisen.

Auch können die Vorsprünge entlang der Hohlzylinderachse wendelförmig verlaufen, so daß die Negativform durch eine Schraubbewegung aus dem beschichteten Hohlzylinderkörper entnommen werden kann.

Ausführungsformen der Erfindung werden anhand der beigefügten Zeichnungen erläutert.

Es zeigen:
- Fig. 1: eine schematische Querschnittsdarstellung eines erfindungsgemäßen Plastifizierzylinder,
- Fig. 2: eine schematische Querschnittsdarstellung einer Negativform,
- Fig. 3: einen Hohlzylinderkörper mit Negativform,
- Fig. 4: einen gefüllten Hohlzylinderkörper vor dem Zentrifugalgießen,
- Fig. 5: den Hohlzylinderkörper nach dem Zentrifugalgießen und
- Fig. 6.: einen Hohlzylinder mit Negativform in einem Zwischenschritt eines erfindungsgemäßen Verfahrens.

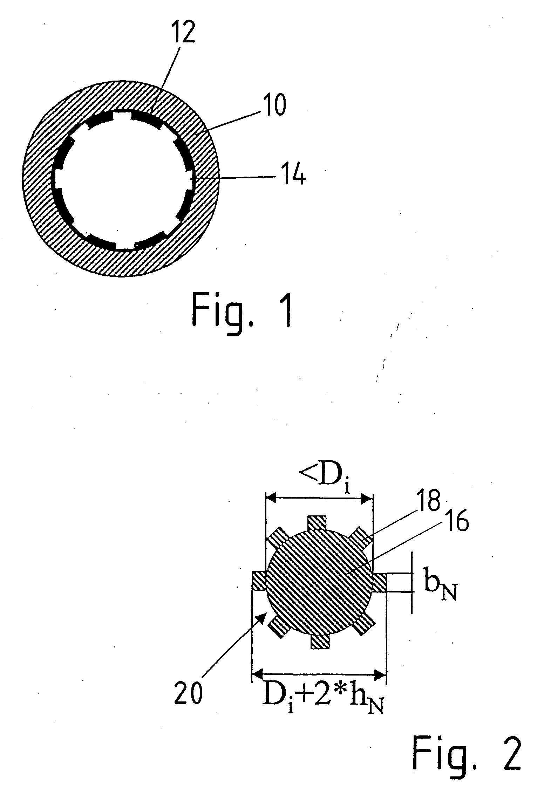

Wie aus Figur 1 ersichtlich ist, umfaßt der erfindungsgemäße Plastifizierzylinder einen Hohlzylinderkörper 10 und eine Verschleißschutzschicht 12, wobei in der Verschleißschutzschicht Nuten 14 ausgebildet sind.

Zu Herstellung des erfindungsgemäßen Plastifizierzylinders wird vorzugsweise die in Fig. 2 dargestellte Negativform verwendet. Diese umfaßt einen zylinderförmigen Grundkörper 16, der radiale Vorsprünge 18 trägt. Die Vorsprünge erstrecken sich entlang der Oberfäche des zylindrischen Grundkörpers und können gerade ausgeführt sein, d.h. Achsparallel zum Grundkörper, oder gewendelt, d.h. um die Oberfläche des Grundkörpers herum verlaufen. Aus dieser Figur ist ersichtlich, daß der Durchmesser des Grundkörpers kleiner ist als der Innendurchmesser Dᵢ des fertigen Plastfizierzylinders; der Außendurchmesser (oder genauer: der Durchmesser des Innenkreises, der die Vorsprung-Außenfläche miteinander verbindet) beträgt Dᵢ + 2*h_{N}, wobei h_{N} die Höhe der auszubildenden Nuten ist.

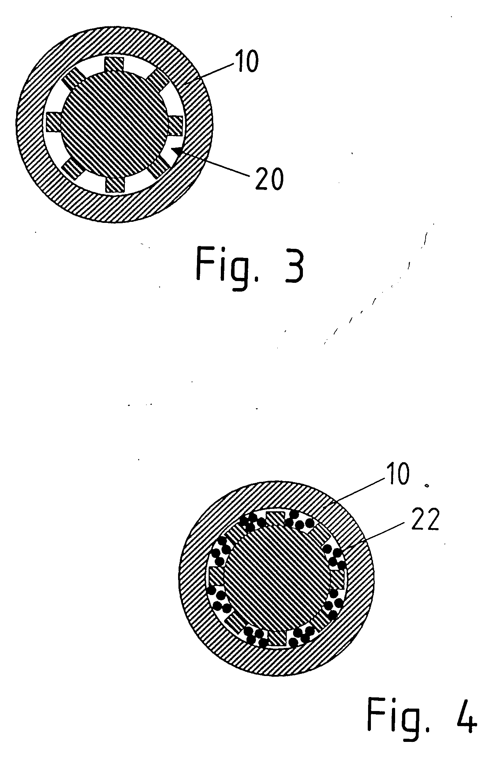

Die in Figur 2 dargestellte Negativform wird in den Hohlzylinderkörper 10 eingebracht, dessen Innendurchmesser um den doppelten Betrag der endgültigen Beschichtungsdicke größer ist als Dᵢ. Anschließend wird Metallpulver 22 in die Zwischenräume zwischen den Vorsprüngen eingebracht, was in Figur 4 dargestellt ist.

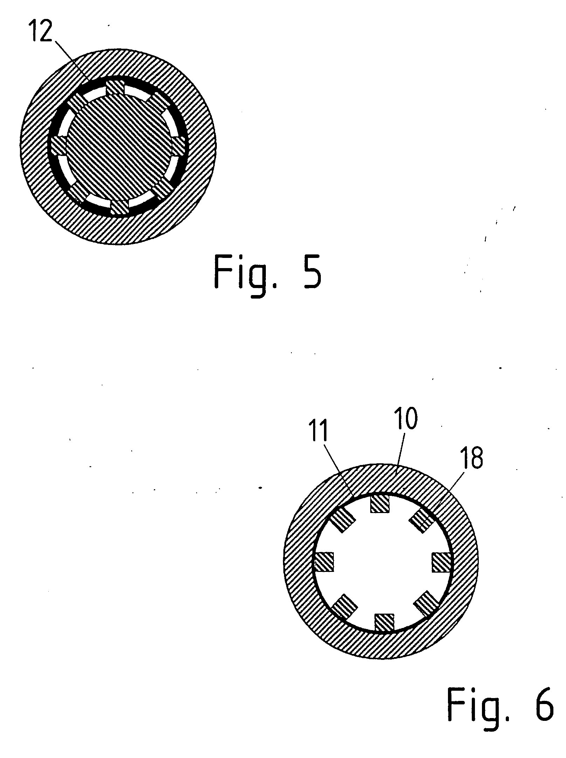

Anschließend wird Zentrifugalgießen durchgeführt, d.h. der Hohlzylinder mit Negativform und Metallpulver wird erhitzt und in eine Axialdrehung gebracht. Dabei wird das Metallpulver 22 aufgeschmolzen und legt sich als Beschichtung an die Innenwand des Zylinderhohlkörpers 10 an und fließt in Spalte zwischen den Vorsprüngen und der Innenwandung, wie Figur 5 zeigt, und bildet die Beschichtung 12. Schließlich wird die Negativform aus dem Hohlzylinderkörper herausgezogen oder, bei wendelförmigen Vorsprüngen, geschraubt, so daß im Bereich der Vorsprünge 18 die Nuten 14 verbleiben. Gegebenenfalls kann sich eine Endbearbeitung der Innenkontur des Plastfizierzylinders durch Honen (Feinschleifen) anschließen.

In einem anderen Beispiel für ein erfindungsgemäßes Verfahren wird die Verschleißschutzschicht 12 in zwei Schritten ausgebildet.

Zunächst wird, wie in Figur 6 dargestellt ist, eine Verschleißschutzschicht 11 mit einheitlicher Dicke an der Innenwandung des Hohlzylinderkörpers 10 ausgebildet, vorzugsweise durch Zentrifugalgießen. Anschließend wird die Negativform 20 oder ein Käfig, der die Vorsprünge 18 trägt in das Innere des Hohlzylinderkörpers eingebracht, wobei die darauf folgenden Schritte dem ersten Ausführungsbeispiel entsprechen. Vorzugsweise werden vor dem Einbringen der Negativform oder des Käfigs die Bereiche der ersten Verschleißschutzschicht 11, an denen die Vorsprünge 18 ausgebildet werden gehont, so daß beim fertigen Plastifizierzylinder die Nutengründe sehr glatt ausgebildet sind. Bei diesem Verfahren wird die Dicke der ersten Verschleißschutzschicht 11 so gewählt, daß die Vorsprünge automatisch an der Verschleißschutzschicht anliegen, so daß die Negativform oder der Käfig nicht zusätzlich zentriert werden muß.

Die Negativform bzw. der Käfig können mehrfach verwendet werden, wobei nach einigen Einsätzen eine Nacharbeit wie Polieren, Beschichten erfolgen kann.

Dadurch, daß der Durchmesser des Grundkörpers der Negativform kleiner ist als der Innendurchmesser Dᵢ des fertigen Plastifizierzylinders (bzw. die Nuthöhe h_{N} kleiner ist als die Höhe ist als die Höhe der Vorsprünge 18), wird sichergestellt, daß die Oberfläche der . Verschleißschutzschicht 12 zwischen den Nuten sich durch die Fliehkräfte sehr gleichmäßig und glatt ausbildet.

Je nach Beanspruchung des Plastifizierzylinders können verschiedene Legierungen als Schutzschicht verwendet werden, die dem Durchschnittsfachmann geläufig sind.

In den oben beschriebenen Verfahren wird mit Metallpulver vor dem Zentrifugalgießen eingefüllt. Selbstverständlich ist es auch möglich das Metallpulver oder flüssige Schmelze während des Zentrifugierens einzufüllen.

Zwar ist das Zentrifugalgießen eine bevorzugte Ausführungsvariante, andere Formverfahren können ebenfalls eingesetzt werden, wobei gegebenenfalls die Dimensionierung der Negativform verändert werden muß.

## Patentansprüche

1. Plastifizierzylinder für eine kunststoffverarbeitende Maschine mit einem Hohlzylinderkörper (10) und einer Innenbeschichtung (12), insbesondere einer Verschleißschutzschicht, **dadurch gekennzeichnet, daß** mindestens eine in Axialrichtung des Hohlzylinderkörpers (10) verlaufende Nut (14) vollständig in der Innenbeschichtung (12) ausgebildet ist.

2. Plastifizierzylinder nach Anspruch 1, **dadurch gekennzeichnet, daß** die Nuten wendelförmig verlaufen.

3. Verfahren zum Herstellen eines Plastifizierzylinders einer kunststoffverabeitenden Maschine, wobei man in einem Hohlzylinderkörper (10) eine Innenbeschichtung (12), insbesondere eine Verschleißschutzschicht, ausbildet, **dadurch gekennzeichnet, daß** man die Innenbeschichtung (12) so ausbildet, daß sie mindestens eine in Längsrichtung des Hohlzylinderkörpers (10) verlaufende Nut (14) aufweist.

4. Verfahren nach Anspruch 3, **dadurch gekennzeichnet, daß** man eine sich axialerstreckende, mit axial verlaufenden Vorsprüngen (18) versehene Negativform (20) in den Hohlzylinderkörper einbringt, einen Zentrifugalgießvorgang zum Aufschmelzen und Verteilen von Material für eine Verschleißschutzschicht durchführt und nach dem Erkalten des Materials die Negativform entfernt.

5. Verfahren nach Anspruch 4, **dadurch gekennzeichnet, daß** man vor dem Einbringen der Negativform (20) den Zylinderhohlkörper durch Zentrifugalgießen mit einer Innenbeschichtung (11) konstanter Dicke versieht.

6. Verfahren nach Anspruch 4 oder 5, **dadurch gekennzeichnet, daß** man die Negativform (20) axial in dem Hohlzylinderkörper zentriert.

7. Verfahren nach einem der Ansprüche 4 bis 6, **dadurch gekennzeichnet, daß** man bei dem Zentrifugalgießen mit Negativform eine Schichtdicke aufträgt, die kleiner ist als die Höhe der Vorsprünge in Radialrichtung.

8. Verfahren nach Anspruch 5, **dadurch gekennzeichnet, daß** man die Innenbeschichtung (11) vor dem Einbringen der Negativform zumindest in den Bereichen hont, in denen die Vorsprünge (18) angeordnet werden.

9. Verfahren nach einem der Ansprüche 4 bis 8, **dadurch gekennzeichnet, daß** man die gesamte Innenfläche der Innenbeschichtung oder den Bereich zwischen den Nuten hont.

10. Negativform zur Durchführung des Verfahrens nach einem der Ansprüche 4 bis 9, **dadurch gekennzeichnet, daß** die Negativform einen vorzugsweise zylindrischen Grundkörper (16) aufweist, der die axialverlaufenden Vorsprünge (18) trägt, wobei der Durchmesser des Grundkörpers (16) kleiner ist als der Endinnendurchmesser (Dᵢ)des beschichteten Plastifizierzylinders.

11. Negativform zur Durchführung des Verfahrens nach einem der Ansprüche 4 bis 9, **dadurch gekennzeichnet, daß** die Vorsprünge (18) Teil eines Käfigs sind.

12. Negativform nach Anspruch 10 oder 11, **dadurch gekennzeichnet, daß** die Oberfläche der Vorsprünge eine haftungs- und /oder reibmindernde Beschichtung aufweist.

13. Negativform nach einem der Ansprüche 10 bis 12, **dadurch gekennzeichnet, daß** die Vorsprünge in Axialrichtung der Negativform verlaufen und in der Richtung, in der die Negativform aus dem Hohlzylinderkörper entfernt wird, eine zunehmende Breite in Umfangsrichtung und/oder eine zunehmende Höhe in Radialrichtung aufweisen.

14. Negativform nach einem der Ansprüche 10 bis 13, **dadurch gekennzeichnet, daß** die Vorsprünge wendelförmig verlaufen.
